# EUROPÄISCHE PATENTSCHRIFT

(11) **EP 3 387 688 B1**
(45) Veröffentlichungstag und Bekanntmachung des Hinweises auf die Patenterteilung: **18.09.2019**
(21) Anmeldenummer: 17713234.7
(22) Anmeldetag: 22.03.2017
(51) Int. Cl.: H01M 4/04, H01M 10/39

(54) **ELEKTROCHEMISCHE ENERGIESPEICHERVORRICHTUNG**
ELECTROCHEMICAL ENERGY STORAGE DEVICE
DISPOSITIF D'ACCUMULATION D'ÉNERGIE ÉLECTROCHIMIQUE

(30) Priorität: 24.03.2016 DE 102016105608
(43) Veröffentlichungstag der Anmeldung: 17.10.2018
(73) Patentinhaber: Battery Consult GmbH, 3860 Meiringen (CH)
(72) Erfinder: DUSTMANN, Cord-Heinrich, 3860 Meiringen (CH); BAYER, Michael, 3860 Meiringen (CH); HARTENBACH, Akane, 3800 Unterseen (CH); KANINA, Maria-Evangelia, 3862 Innertkirchen (CH); LEUTHOLD, Alexander, 6072 Sachseln (CH)
(74) Vertreter: Daub, Thomas
(86) Internationale Anmeldenummer: PCT/EP2017/056862
(87) Internationale Veröffentlichungsnummer: WO 2017/162762

(56) Entgegenhaltungen:
- US-A- 4 894 299
- US-A- 5 112 703
- US-A- 5 194 343
- US-A- 5 320 915
- US-A1- 2012 088 133

## Beschreibung

### Stand der Technik

Die Erfindung betrifft eine elektrochemische Energiespeichervorrichtung nach dem Oberbegriff des Anspruchs 1.

Aus der DE 195 38 003 A1 ist bereits eine elektrochemische Energiespeichervorrichtung mit zumindest einer Speicherzelle, welche zumindest einen Kathodenraum, zumindest einen Anodenraum, zumindest einen zwischen dem Kathodenraum und dem Anodenraum angeordneten Separator und zumindest einen elektrisch isolierenden Rahmen aufweist, welcher zumindest den Kathodenraum umgibt, bekannt.

Des Weiteren sind aus US 4,894,299 A, US 5,320,915 A, US 5,112,703 A und US 2012/088133 A1 bereits elektrochemische Energiespeichervorrichtungen bekannt, die zumindest eine Speicherzelle umfassen, welche zumindest einen Kathodenraum, zumindest einen Anodenraum, zumindest einen zwischen dem Kathodenraum und dem Anodenraum angeordneten zumindest im Wesentlichen ebenen Separator und zumindest einen elektrisch isolierenden Rahmen aufweist, welcher zumindest den Kathodenraum umgibt. Der Rahmen der Speicherzelle der bereits bekannten elektrochemischen Energiespeichervorrichtungen ist mittels eines Glases mit dem zumindest im Wesentlichen ebenen Separator verbunden.

Die Aufgabe der Erfindung besteht insbesondere darin, eine gattungsgemäße Energiespeichervorrichtung mit vorteilhaften Eigenschaften hinsichtlich einer Konstruktion bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer elektrochemischen Energiespeichervorrichtung, insbesondere von einer Hochtemperaturenergiespeichervorrichtung, mit zumindest einer Speicherzelle, welche zumindest einen Kathodenraum, zumindest einen Anodenraum, zumindest einen zwischen dem Kathodenraum und dem Anodenraum angeordneten zumindest im Wesentlichen ebenen Separator und zumindest einen elektrisch isolierenden Rahmen aufweist, welcher zumindest den Kathodenraum umgibt, wobei der Rahmen mittels eines Glases mit dem zumindest im Wesentlichen ebenen Separator verbunden ist.

Es wird vorgeschlagen, dass die elektrochemische Energiespeichervorrichtung zumindest einen kathodenseitigen Dichtring aufweist, welcher eine dem Kathodenraum zugewandte Metallschicht, deren elektrochemisches Potential höher oder gleich einem elektrochemischen Potential eines aktiven Kathodenmaterials ist, und eine dem Kathodenraum abgewandte Metallschicht umfasst.

Unter einer "Speicherzelle" soll in diesem Zusammenhang insbesondere eine elektrochemische Einheit verstanden werden, welche dazu vorgesehen ist, elektrische Energie zu speichern und/oder gespeicherte elektrische Energie insbesondere an zumindest einen elektrischen Verbraucher abzugeben. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Insbesondere ist die Speicherzelle als eine Speicherzelle ausgebildet, welche bei erhöhter Betriebstemperatur arbeitet. Insbesondere weist die Speicherzelle eine Betriebstemperatur von zumindest 200°C auf. Die Energiespeichervorrichtung kann insbesondere eine Mehrzahl von elektrisch miteinander verbundenen, insbesondere zumindest im Wesentlichen identisch zueinander ausgebildeten, Speicherzellen aufweisen. Die Speicherzelle weist insbesondere einen Kathodenraum und zumindest einen Anodenraum auf. Die Speicherzelle weist ferner eine Kathode auf, welche insbesondere zumindest ein aktives Kathodenmaterial und zumindest einen Elektrolyten, welcher insbesondere bei einer Betriebstemperatur der Speicherzelle flüssig ist, umfasst. Das aktive Kathodenmaterial ist im geladenen Zustand der Speicherzelle insbesondere zumindest von einem Metallchlorid, vorzugsweise von einem Übergangsmetallchlorid, beispielsweise Nickelchlorid und/oder Eisen(II)-Chlorid, und/oder einem Metall, insbesondere einem Übergangsmetall, gebildet. Der Elektrolyt ist insbesondere zumindest zu einem Großteil von einem Salzschmelzelektrolyt, insbesondere von einem Natriumchloraluminat, gebildet. Insbesondere in einem montierten Zustand ist die Kathode zumindest im Wesentlichen vollständig in dem Kathodenraum der Speicherzelle angeordnet. Ferner weist die Speicherzelle eine Anode auf, welche insbesondere zumindest zu einem Großteil von einem Alkalimetall, beispielsweise Natrium, gebildet ist. Das Alkalimetall der Anode ist insbesondere bei einer Betriebstemperatur der Speicherzelle flüssig.

Unter einem "Separator" soll in diesem Zusammenhang insbesondere ein Festelektrolytseparator verstanden werden, welcher zu einem Ionentransport zwischen dem Anodenraum und dem Kathodenraum vorgesehen ist. Der Separator ist insbesondere zumindest zu einem Großteil von einem Natriumionen leitenden Material, beispielsweise von einem β-Aluminiumoxid und vorzugsweise von einem β"-Aluminiumoxid, gebildet. Insbesondere ist der Separator als eine zumindest im Wesentlichen ebene Scheibe ausgebildet. Der Separator weist insbesondere eine zumindest im Wesentlichen kreisförmige Grundfläche auf. Insbesondere weist der Separator eine Dicke von zumindest 0,1mm auf. Der elektrisch isolierende Rahmen ist insbesondere zumindest im Wesentlichen kreisringförmig ausgebildet. Insbesondere weist der Rahmen an einem Innenumfang einen Falz, insbesondere einen Stufenfalz, auf, welcher dazu vorgesehen ist, insbesondere zumindest einen Randbereich des Separators aufzunehmen. Der Falz weist insbesondere eine Tiefe auf, welche zumindest einer Dicke des Separators entspricht. Insbesondere umschließt der Rahmen in einem montierten Zustand den Separator in Umfangsrichtung zumindest im Wesentlichen vollständig. Vorzugsweise ist der Rahmen zumindest zu einem Großteil von einem α-Aluminiumoxid gebildet. Insbesondere begrenzt der Rahmen in einem montierten Zustand den Kathodenraum in Umfangsrichtung zumindest im Wesentlichen vollständig. Insbesondere umgibt der Rahmen die Kathode in einem montierten Zustand in Umfangsrichtung zumindest im Wesentlichen vollständig.

Insbesondere ist der Rahmen in einem montierten Zustand mittels eines Glases zumindest im Wesentlichen hermetisch mit dem Separator verbunden. Insbesondere ist zumindest ein Randbereich des Separators mittels des Glases mit dem Rahmen verbunden. Insbesondere ist der Separator in einem montierten Zustand in einer Falz des Rahmens angeordnet und mittels des Glases in dem Falz des Rahmens fixiert. Insbesondere ist der Separator in Umfangsrichtung zumindest im Wesentlichen vollständig mittels des Glases mit dem Rahmen verbunden. Insbesondere ist das Glas zumindest weitgehend resistent gegenüber den Materialien der Anode und/oder der Kathode und insbesondere zumindest weitgehend resistent gegenüber Natrium, dem aktiven Anodenmaterial und/oder dem Salzschmelzelektrolyten. Das Glas weist insbesondere einen Wärmeausdehnungskoeffizienten auf, welcher zumindest weitgehend ähnlich mit einem Wärmeausdehnungskoeffizienten des Separators und/oder des Rahmens ist.

Durch eine derartige Ausgestaltung kann eine Energiespeichervorrichtung mit vorteilhaften konstruktiven Eigenschaften bereitgestellt werden. Insbesondere durch eine Verwendung eines Glases eine vorteilhaft einfache, sichere und/oder kostengünstige Verbindung des Rahmens mit dem Separator erreicht werden.

Ferner wird vorgeschlagen, dass die Speicherzelle zumindest einen kathodenseitigen Dichtring aufweist, welcher mittels einer Glasdichtung an einem Außenumfang des Rahmens abdichtet und in jedem Betriebszustand, insbesondere bei jeder Betriebstemperatur der Speicherzelle, eine positive mechanische Spannung auf die Glasdichtung ausübt. Insbesondere erstreckt sich der kathodenseitige Dichtring zumindest im Wesentlichen vollständig um den Außenumfang des Rahmens. Der kathodenseitige Dichtring ist insbesondere weitestgehend beständig gegenüber dem aktiven Kathodenmaterial und/oder dem Salzschmelzelektrolyten. Insbesondere ist der kathodenseitige Dichtring zumindest im Wesentlichen kreisringförmig ausgebildet. Ein Innendurchmesser der kathodenseitigen Dichtung entspricht insbesondere zumindest im Wesentlichen einem Außendurchmesser des Rahmens. Ein Wärmeausdehnungskoeffizient des kathodenseitigen Dichtrings ist zumindest weitestgehend an einen Wärmeausdehnungskoeffizienten des Rahmens angepasst. Insbesondere ist der kathodenseitige Dichtring zumindest zu einem Großteil von einem metallischen Material gebildet. Die Glasdichtung weist insbesondere einen Wärmeausdehnungskoeffizienten auf, welcher zumindest im Wesentlichen einem Wärmeausdehnungskoeffizienten des Rahmens und/oder dem kathodenseitigen Dichtring entspricht. Insbesondere dichtet der kathodenseitige Dichtring mittels der Glasdichtung an einem Außenumfang des Rahmens zumindest im Wesentlichen hermetisch ab. Durch die positive mechanische Spannung, welche der kathodenseitige Dichtring zu jedem Zeitpunkt auf die Glasdichtung ausübt, kann eine vorteilhaft dauerhafte, sichere, einfache und/oder kostengünstigere Abdichtung an dem Außenumfang des Rahmens erfolgen.

Eine Festigkeit und ein Ausdehnungskoeffizient der dem Kathodenraum abgewandte Metallschicht ist insbesondere so gewählt, dass die Kombination der Metallschichten bei allen Betriebstemperaturen unter 400°C eine positive Vorspannung erzeugt. Insbesondere weist der kathodenseitige Dichtring zumindest zwei Materialschichten auf. Beispielsweise kann eine der Kathode zugewandte Materialschicht zumindest im Wesentlichen aus Nickel gebildet sein. Eine der Kathode abgewandte Materialschicht kann beispielsweise zumindest im Wesentlichen aus einem Stahl ausgebildet sein. Die Materiallagen weisen jeweils insbesondere eine Materialstärke zwischen 0,1 mm und 1,0 mm auf. Alternativ oder zusätzlich kann der kathodenseitige Dichtring zumindest zu einem Großteil aus einem Material bestehen, welches zumindest auf einer der Kathode zugewandten Seite mit einem Metall beschichtet ist, dessen elektrochemisches Potential höher oder gleich dem elektrochemischen Potential des Aktivmaterials der positiven Elektrode ist. Insbesondere weist das Material einen Wärmeausdehnungskoeffizienten zwischen 8x10⁻⁶ K⁻¹ und 16x10⁻⁶ K⁻¹ auf. Hierdurch kann eine vorteilhaft lange Lebensdauer des kathodenseitigen Dichtrings erreicht werden. Insbesondere kann durch eine der Kathode zugewandte Metallschicht, dessen elektrochemisches Potential höher oder gleich dem elektrochemischen Potential des Aktivmaterials der positiven Elektrode ist, eine vorteilhafte Beständigkeit gegenüber dem aktiven Kathodenmaterial und/oder dem Salzschmelzelektrolyten erreicht werden. Ferner kann durch die Kombination der Metallschichten ein vorteilhafter Wärmeausdehnungskoeffizient des kathodenseitigen Dichtrings realisiert werden.

Des Weiteren wird vorgeschlagen, dass die Speicherzelle zumindest einen anodenseitigen Dichtring aufweist, welcher mittels einer Glasdichtung an einem Außenumfang des Rahmens abdichtet und in jedem Betriebszustand eine positive mechanische Spannung auf die Glasdichtung ausübt. Insbesondere erstreckt sich der anodenseitige Dichtring zumindest im Wesentlichen vollständig um den Außenumfang des Rahmens. Der anodenseitige Dichtring ist insbesondere weitestgehend beständig gegenüber dem Anodenmaterial. Insbesondere ist der anodenseitige Dichtring zumindest im Wesentlichen kreisringförmig ausgebildet. Ein Innendurchmesser des anodenseitigen Dichtrings entspricht insbesondere zumindest im Wesentlichen einem Außendurchmesser des Rahmens. Ein Wärmeausdehnungskoeffizient des anodenseitigen Dichtrings ist zumindest weitestgehend an einen Wärmeausdehnungskoeffizienten des Rahmens dahingehend angepasst, dass bei allen Betriebstemperaturen unterhalb oder gleich 400°C eine positive Vorspannung besteht. Insbesondere ist der anodenseitige Dichtring zumindest zu einem Großteil von einem metallischen Material gebildet. Vorzugsweise ist der anodenseitige Dichtring zumindest zu einem Großteil aus einem Stahl gebildet. Insbesondere weist der anodenseitige Dichtring eine Materialstärke zwischen 0,1 mm und 1,0 mm auf. Die Glasdichtung weist insbesondere einen Wärmeausdehnungskoeffizienten auf, welcher zumindest im Wesentlichen einem Wärmeausdehnungskoeffizienten des Rahmens und/oder des anodenseitigen Dichtrings entspricht. Insbesondere ist der anodenseitige Dichtring mittels der Glasdichtung hermetisch mit dem Rahmen verbunden. Hierdurch kann eine vorteilhaft dauerhafte, sichere, einfache und/oder kostengünstige Abdichtung des Anodenraumes erfolgen.

Vorteilhaft weist die Speicherzelle zumindest ein Stützelement auf, welches dazu vorgesehen ist, den Separator anodenseitig mechanisch zu stabilisieren. Das Stützelement ist insbesondere gesondert von dem Separator ausgebildet. Insbesondere ist das Stützelement in einem montierten Zustand in dem Anodenraum der Speicherzelle angeordnet. Insbesondere ist das Stützelement zumindest im Wesentlichen scheibenförmig ausgebildet. Das Stützelement weist insbesondere eine zumindest im Wesentlichen kreisförmige Grundfläche auf. Das Stützelement ist insbesondere zumindest zu einem Großteil von einem elektrisch leitfähigen Metall, vorzugsweise Aluminium, gebildet. Vorzugsweise weist das Stützelement eine Vielzahl von Ausnehmungen auf, welche dazu vorgesehen sind, in zumindest einem Betriebszustand der Speicherzelle zumindest ein Alkalimetall, insbesondere Natrium, aufzunehmen. Insbesondere sind die Ausnehmungen dazu vorgesehen, in einem geladenen Zustand der Speicherzelle ein Alkalimetall aufzunehmen. Die Ausnehmungen weisen jeweils insbesondere einen Durchmesser zwischen 1 mm und 5 mm auf. Insbesondere verlaufen die Ausnehmungen zumindest im Wesentlichen parallel zueinander. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Die Ausnehmungen verlaufen insbesondere zumindest im Wesentlichen senkrecht zu einer Oberfläche des Separators. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Hierdurch kann der Separator auf vorteilhaft einfache und/oder effektive Weise mechanisch stabilisiert und somit vorteilhaft eine mechanische Beschädigung und/oder Zerstörung zumindest weitestgehend vermieden werden und gleichzeitig eine ausreichende Menge eines Alkalimetalls in den Ausnehmungen des Stützelements gespeichert werden.

Ferner wird vorgeschlagen, dass die Speicherzelle zumindest ein Stützelement aufweist, welches dazu vorgesehen ist, den Separator anodenseitig mechanisch zu stabilisieren und welches eine Vielzahl von Ausnehmungen mit einem Durchmesser zwischen 1 mm und 3 mm aufweist, welche dazu vorgesehen sind, mit dem Separator einen Hohlraum auszubilden und in zumindest einem Betriebszustand der Speicherzelle zumindest ein Alkalimetall aufzunehmen. Insbesondere sind die Ausnehmungen als Sackausnehmungen ausgebildet. Hierdurch kann eine Vorimprägnierung des Stützelements mit flüssigen Natrium und/oder eine Benetzung des Stützelements mit flüssigem Natrium vor einer Integration in die Speicherzelle vorteilhaft entfallen.

Zudem wird vorgeschlagen, dass die Energiespeichervorrichtung zumindest eine weitere Speicherzelle aufweist, welche mit der Speicherzelle elektrisch verbunden ist. Insbesondere ist die weitere Speicherzelle zumindest im Wesentlichen identisch zu der Speicherzelle ausgebildet. Die Speicherzelle und die weitere Speicherzelle sind insbesondere stapelförmig angeordnet. Die weitere Speicherzelle ist insbesondere elektrisch in Reihe mit der Speicherzelle verbunden. Vorzugsweise weist die Energiespeichervorrichtung zumindest eine Bipolarplatte auf, welche unmittelbar zwischen einer Kathode der Speicherzelle und einer Anode der weiteren Speicherzelle angeordnet ist. Die Bipolarplatte ist insbesondere dazu vorgesehen, die Kathode der Speicherzelle elektrisch leitend mit der Anode der weiteren Speicherzelle zu verbinden. Insbesondere sind der kathodenseitige Dichtring der Speicherzelle und der anodenseitige Dichtring der weiteren Speicherzelle mit der Bipolarplatte verschweißt. Insbesondere erfolgt die Verschweißung der Speicherzellen im Vakuum unter einem Druck von kleiner 30 mbar. Insbesondere ist die Speicherzelle anodenseitig mit einer Endplatte abgeschlossen. Die weitere Speicherzelle ist insbesondere kathodenseitig mit einer Endplatte abgeschlossen. Hierdurch kann bei einem vorteilhaft einfachen und/oder kostengünstigen konstruktiven Aufbau eine vorteilhaft hohe Leistung der Energiespeichervorrichtung erreicht werden.

Insbesondere in Kombination mit zumindest einem zuvor beschriebenen Merkmal aber vorzugsweise auch unabhängigen von zuvor beschriebenen Merkmalen wird vorgeschlagen, dass die Speicherzelle eine Kathode aufweist, welche zumindest teilweise aus pulverförmigen Grundstoffen mit einer Korngröße zwischen 2 µm und 500 µm gepresst ist und in welcher sich bei einem ersten Aufheizen auf eine Betriebstemperatur zwischen 200°C und 350°C ein flüssiger Elektrolyt ausbildet. Insbesondere erfolgt ein Verpressen der pulverförmigen Grundstoffe bei Raumtemperatur und/oder unter Vakuum. Unter einer "Raumtemperatur" soll in diesem Zusammenhang insbesondere eine Temperatur zwischen 18°C und 25°C verstanden werden. Die pulverförmigen Grundstoffe können insbesondere eine Mischung von Pulvern eines oder mehrerer Übergangsmetalle, vorzugsweise Nickel oder/und Eisen, ein Natriumchloridpulver, ein Aluminiumchloridpulver und/oder ein Natriumtetrachloroaluminatpulver sein. Insbesondere ist die Kathode zumindest im Wesentlichen tablettenförmig gepresst. Vorzugsweise sind die pulverförmigen Grundstoffe dazu vorgesehen, während zumindest eines Betriebs, insbesondere eines Erstbetriebs, der Speicherzelle eine aktive Masse der Kathode und einen flüssigen Elektrolyt auszubilden. Insbesondere bildet zumindest ein erster Teil der pulverförmigen Grundstoffe während zumindest eines Betriebs und insbesondere während einer Erstinbetriebnahme der Speicherzelle die aktive Masse der Kathode aus, während zumindest ein zweiter Teil der pulverförmigen Grundstoffe den flüssigen Elektrolyten ausbildet. Insbesondere bilden zumindest ein Nickelpulver, ein Natriumchloridpulver und/oder ein Eisenpulver die aktive Masse der Kathode aus. Ein Natriumtetrachloroaluminatpulver bildet insbesondere den flüssigen Elektrolyten aus. Alternativ oder zusätzlich kann der flüssige Elektrolyt durch eine, während einer Erstinbetriebnahme der Speicherzelle stattfindende, chemische Reaktion von einem Natriumchloridpulver mit einem Aluminiumchloridpulver gebildet werden. Vorzugsweise sind die pulverförmigen Grundstoffe dazu vorgesehen sind, während zumindest eines Betriebs der Speicherzelle im Kathodenraum ein Reservoir für den flüssigen Elektrolyten auszubilden, welches dazu vorgesehen ist, einen Volumenausgleich zwischen einem geladenen und einem ungeladenen Zustand der Speicherzelle zu gewährleisten. Hierdurch kann eine vorteilhaft einfache und/oder kostengünstige Herstellung einer Kathode erreicht werden.

Zudem wird ein Verfahren zur Herstellung der erfindungsgemäßen elektrochemischen Energiespeichervorrichtung mit zumindest der Speicherzelle, welche zumindest die Kathode, zumindest die Anode, zumindest den zwischen der Kathode und der Anode angeordneten Separator und zumindest den elektrisch isolierenden Rahmen aufweist, welcher zumindest den Kathodenraum umgibt, bei welchem in einem Verfahrensschritt der Rahmen mittels eines Glases gleichzeitig mit dem Separator, dem kathodenseitigen Dichtring, welcher mit einer Oxidschicht vorkonditioniert ist, und/oder einem anodenseitigen Dichtring verbunden wird, wobei, insbesondere in Kombination mit zumindest einem zuvor beschriebenen Merkmal aber vorzugsweise auch unabhängig von zuvor beschriebenen Merkmalen, in zumindest einem Verfahrensschritt eine Kathode zumindest teilweise aus pulverförmigen Grundstoffen, insbesondere tablettenförmig, gepresst wird. Die Verbindung zwischen dem Separator und dem Rahmen und die Befestigung dem kathodenseitigen Dichtring und/oder dem anodenseitigen Dichtring können vorzugsweise in einem gemeinsamen Verfahrensschritt erfolgen. Der Separator, der Rahmen und die Dichtringe bilden eine mechanische Grundeinheit der Speicherzelle aus. Insbesondere bei einer Herstellung einer Energiespeichervorrichtung mit zumindest zwei Speicherzellen werden in zumindest einem Verfahrensschritt eine negative Endplatte, ein Stützelement einer ersten Speicherzelle, eine mechanische Grundeinheit der ersten Speicherzelle, eine Kathode der ersten Speicherzelle, eine Bipolarplatte, ein Stützelement einer weiteren Speicherzelle, eine mechanische Grundeinheit der weiteren Speicherzelle, eine Kathode der weiteren Speicherzelle und eine positive Endplatte in einem Stapel angeordnet. Insbesondere kann der Stapel eine Vielzahl von insbesondere zumindest im Wesentlichen identisch ausgebildeten Speicherzellen umfassen. Ein Aufbau einer Energiespeichervorrichtung mit mehr als zwei Speicherzellen erfolgt entsprechend. In einem weiteren Verfahrensschritt wird der Stapel insbesondere in einer Vakuumkammer auf einen Druck von insbesondere weniger als 10 mbar evakuiert. In einem weiteren Verfahrensschritt wird der Stapel bis zu einem Druck zwischen 2 mbar und 50 mbar mit Helium geflutet. Der Stapel wird in einem weiteren Verfahrensschritt mit einer axialen Druckkraft beaufschlagt. Die Komponenten des Stapels werden in zumindest einem weiteren Verfahrensschritt insbesondere mittels eines Laserschweißverfahrens miteinander verschweißt. Insbesondere wird die negative Endplatte mit der anodenseitigen Dichtung der ersten Speicherzelle verschweißt. Der kathodenseitige Dichtring der ersten Speicherzelle wird insbesondere mit der Bipolarplatte verschweißt. Der anodenseitige Dichtring der weiteren Speicherzelle wird insbesondere mit der Bipolarplatte verschweißt. Insbesondere wird der kathodenseitige Dichtring der weiteren Speicherzelle mit der positiven Endplatte verschweißt. Hierdurch kann eine vorteilhaft einfache, sichere und/oder kostengünstige Herstellung einer Energiespeichervorrichtung erreicht werden.

In einem Verfahrensschritt werden die pulverförmigen Grundstoffe miteinander vermischt. Insbesondere werden die pulverförmigen Grundstoffe unter einer Inertgasatmosphäre miteinander vermischt. In einem weiteren Verfahrensschritt wird das Pulvergemisch beispielsweise mittels einer hydraulischen Presse verpresst. Das Verpressen erfolgt insbesondere unter einem Vakuum. Hierdurch kann eine vorteilhafte Vorfertigung der Kathode erfolgen.

Die erfindungsgemäße Energiespeichervorrichtung soll hierbei nicht auf die oben beschriebene Anwendung und Ausführungsform beschränkt sein. Insbesondere kann die erfindungsgemäße Energiespeichervorrichtung zu einer Erfüllung einer hierin beschriebenen Funktionsweise eine von einer hierin genannten Anzahl von einzelnen Elementen, Bauteilen und Einheiten abweichende Anzahl aufweisen. Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Schnittdarstellung einer elektrochemischen Energiespeichervorrichtung mit zwei Speicherzellen,
- Fig. 2: eine Draufsicht eines Stützelements einer Speicherzelle und

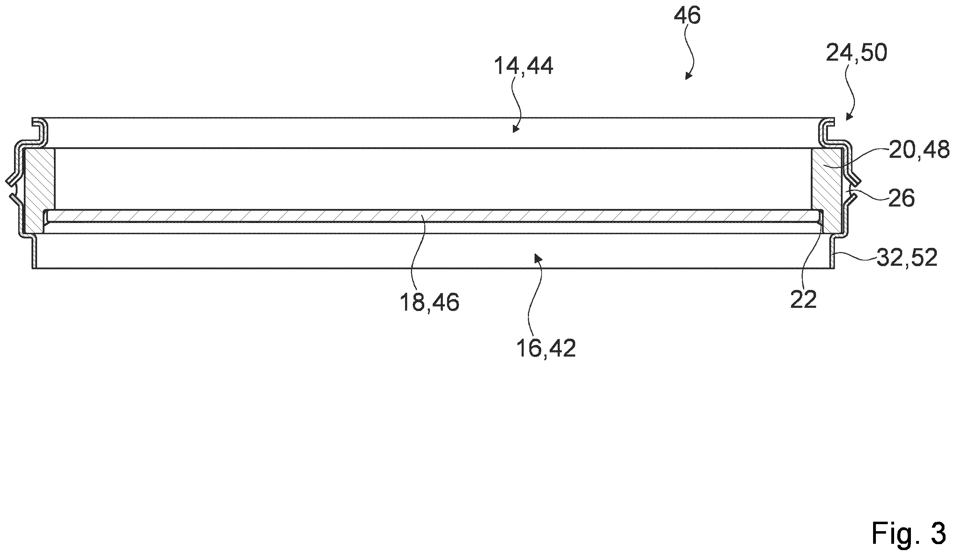

- Fig. 3: eine mechanische Grundeinheit einer Speicherzelle.

### Beschreibung des Ausführungsbeispiels

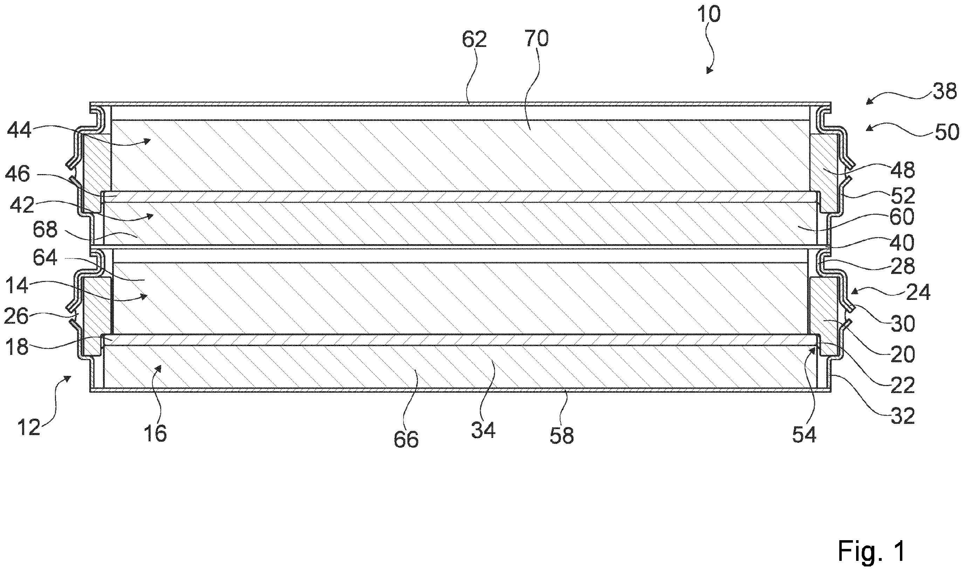

Figur 1 zeigt eine Schnittdarstellung einer elektrochemischen Energiespeichervorrichtung 10. Die Energiespeichervorrichtung 10 weist eine Speicherzelle 12 auf, welche einen Kathodenraum 14, einen Anodenraum 16 und einen zwischen dem Kathodenraum 14 und dem Anodenraum 16 angeordneten Separator 18 aufweist. Ferner weist die Speicherzelle 12 eine Kathode 64 auf, welche ein aktives Kathodenmaterial und zumindest einen Elektrolyten, welcher insbesondere bei einer Betriebstemperatur der Speicherzelle 12 flüssig ist, umfasst. Das aktive Kathodenmaterial ist zumindest zu einem Großteil von einem Metallchlorid, vorzugsweise von einem Übergangsmetallchlorid, beispielsweise Nickelchlorid und/oder Eisen(II)-Chlorid, gebildet. Der Elektrolyt ist insbesondere zumindest zu einem Großteil von einem Salzschmelzelektrolyt, insbesondere von einem Natriumchloraluminat, gebildet. Die Kathode 64 ist vollständig in dem Kathodenraum 14 angeordnet. Eine Anode 66 der Speicherzelle 12 ist zumindest zu einem Großteil von einem Alkalimetall, beispielsweise Natrium, gebildet. Das Alkalimetall der Anode 66 ist insbesondere bei einer Betriebstemperatur der Speicherzelle 12 flüssig. Die Anode 66 ist vollständig in dem Anodenraum 16 angeordnet. Der Separator 18 ist als ein Festelektrolytseparator ausgebildet, welcher zu einem Ionentransport zwischen dem Anodenraum 16 und dem Kathodenraum 14 vorgesehen ist. Der Separator 18 ist insbesondere zumindest zu einem Großteil von einem Natriumionen leitenden Material und vorzugsweise von einem β"-Aluminiumoxid gebildet. Der Separator 18 ist als eine ebene Scheibe mit einer zumindest im Wesentlichen kreisförmigen Grundfläche ausgebildet.

Ferner weist die Speicherzelle 12 einen elektrisch isolierenden Rahmen 20 auf, welcher den Kathodenraum 14 in Umfangsrichtung umgibt. Der Rahmen 20 ist zumindest im Wesentlichen kreisringförmig ausgebildet. Der Rahmen 20 weist an einem Innenumfang einen Stufenfalz 54 auf, welcher dazu vorgesehen ist den Separator 18 aufzunehmen. Der Rahmen 20 umschließt in einem montierten Zustand den Separator 18 und den Kathodenraum 14 in Umfangsrichtung vollständig. Vorzugsweise ist der Rahmen 20 zumindest zu einem Großteil von einem α-Aluminiumoxid gebildet. Der Rahmen 20 ist mittels eines Glases 22 mit dem Separator 18 verbunden.

Die Speicherzelle 12 weist ferner einen kathodenseitigen Dichtring 24 auf, welcher mittels einer Glasdichtung 26 an einem Außenumfang des Rahmens 20 abdichtet. Der kathodenseitige Dichtring 24 übt in jedem Betriebszustand eine positive mechanische Spannung auf die Glasdichtung 26 aus. Der kathodenseitige Dichtring 24 erstreckt sich vollständig um den Außenumfang des Rahmens 20. Der kathodenseitige Dichtring 24 ist zumindest im Wesentlichen kreisringförmig ausgebildet. Ein Innendurchmesser des kathodenseitigen Dichtrings 24 entspricht zumindest im Wesentlichen einem Außendurchmesser des Rahmens 20.

Der kathodenseitige Dichtring 24 umfasst eine dem Kathodenraum 14 zugewandte Metallschicht 28, beispielsweise eine Nickelschicht, welche ein elektrochemisches Potential aufweist, das höher oder gleich dem elektrochemischen Potential einer aktiven Kathodenmasse ist, und eine dem Kathodenraum 14 abgewandte Metallschicht 30, beispielsweise eine Stahlschicht, deren Festigkeit und Ausdehnungskoeffizient so gewählt sind, dass die Kombination der Metallschichten 28, 30 bei allen Betriebstemperaturen unterhalb von 400°C eine positive Vorspannung erzeugt. Die Metallschicht 28 ist zumindest weitestgehend beständig gegenüber dem aktiven Kathodenmaterial und/oder dem flüssigen Elektrolyten. Die Metallschicht 30 weist vorzugsweise einen Wärmeausdehnungskoeffizienten zwischen 8x10⁻⁶ K⁻¹ und 16x10⁻⁶ K⁻¹ auf, wodurch ein Wärmeausdehnungskoeffizient des kathodenseitigen Dichtrings 24 zumindest weitestgehend an einen Wärmeausdehnungskoeffizienten des Rahmens 20 angepasst ist. Ferner weist die Speicherzelle 12 einen anodenseitigen Dichtring 32 auf, welcher mittels der Glasdichtung 26 an einem Außenumfang des Rahmens 20 abdichtet. Der anodenseitige Dichtring 32 ist zumindest im Wesentlichen kreisringförmig ausgebildet. Ein Innendurchmesser des anodenseitigen Dichtrings 32 entspricht insbesondere zumindest im Wesentlichen einem Außendurchmesser des Rahmens 20. Ein Wärmeausdehnungskoeffizient des anodenseitigen Dichtrings 32 ist zumindest weitestgehend an einen Wärmeausdehnungskoeffizienten des Rahmens 20 angepasst, dass bei allen Betriebstemperaturen eine positive Vorspannung verbleibt. Vorzugsweise ist der anodenseitige Dichtring 32 zumindest zu einem Großteil aus einem Stahl gebildet. Die Glasdichtung 26 weist einen Wärmeausdehnungskoeffizienten auf, welcher zumindest im Wesentlichen einem Wärmeausdehnungskoeffizienten des Rahmens 20, des kathodenseitigen Dichtrings 24 und/oder des anodenseitigen Dichtrings 32 entspricht.

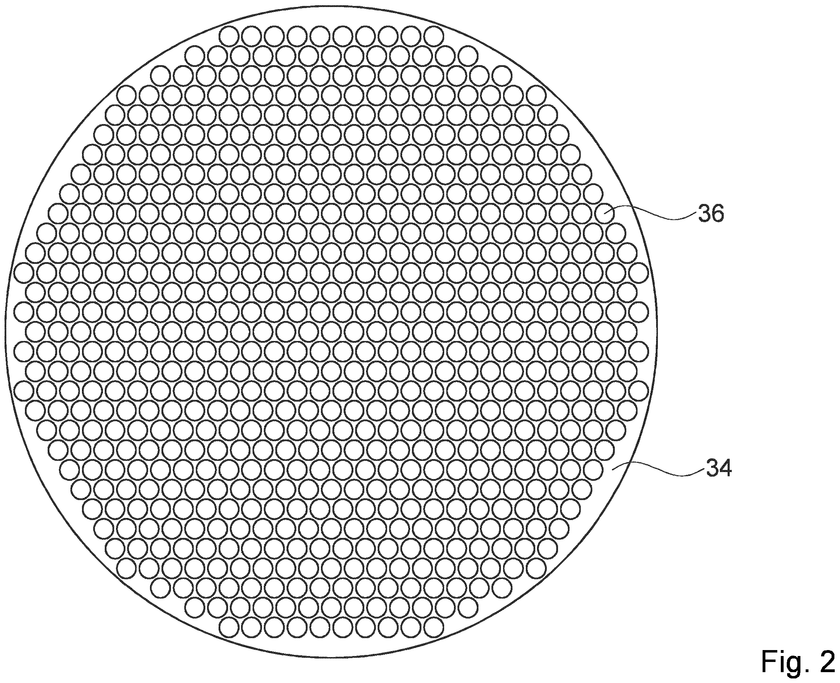

Die Speicherzelle 12 weist des Weiteren ein Stützelement 34 auf, welches dazu vorgesehen ist, den Separator 18 anodenseitig mechanisch zu stabilisieren. Das Stützelement 34 ist gesondert von dem Separator 18 ausgebildet. Das Stützelement 34 ist zumindest im Wesentlichen scheibenförmig ausgebildet. Das Stützelement 34 weist eine zumindest im Wesentlichen kreisförmige Grundfläche auf. Das Stützelement 34 ist zumindest zu einem Großteil von einem elektrisch leitfähigen Metall, vorzugsweise Aluminium, gebildet. Das Stützelement 34 weist eine Vielzahl von Ausnehmungen 36 mit einem Durchmesser zwischen 1 mm und 3 mm auf (vgl. Figur 2), welche dazu vorgesehen sind, mit dem Separator 18 Hohlräume auszubilden und während eines Betriebs der Speicherzelle 12 ein Alkalimetall, vorzugsweise Natrium, aufzunehmen. Die Ausnehmungen 36 verlaufen zumindest im Wesentlichen parallel zueinander und zumindest im Wesentlichen senkrecht zu einer Oberfläche des Separators 18.

Die Energiespeichervorrichtung 10 weist eine weitere Speicherzelle 38 auf, welche mit der Speicherzelle 12 elektrisch in Reihe verbunden ist. Die weitere Speicherzelle 38 ist identisch zu der Speicherzelle 12 ausgebildet. Die weitere Speicherzelle 38 umfasst wie die Speicherzelle 12 einen Kathodenraum 44, eine Anodenraum 42, einen zwischen dem Kathodenraum 44 und dem Anodenraum 42 angeordneten Separator 46 und einen elektrisch isolierenden Rahmen 48, welcher den Kathodenraum 44 in Umfangsrichtung umgibt. Ferner weist auch die weitere Speicherzelle 38 einen kathodenseitigen Dichtring 50 und einen anodenseitigen Dichtring 52 auf. Die Energiespeichervorrichtung 10 weist eine Bipolarplatte 40 auf, welche unmittelbar zwischen der Kathode 64 der Speicherzelle 12 und einer Anode 68 der weiteren Speicherzelle 38 angeordnet ist. Die Bipolarplatte 40 ist dazu vorgesehen, die Kathode 64 der Speicherzelle 12 elektrisch leitend mit der Anode 68 der weiteren Speicherzelle 38 zu verbinden.

Die Kathoden 64, 70 der Speicherzellen 12, 38 sind jeweils aus pulverförmigen Grundstoffen tablettenförmig gepresst. Die pulverförmigen Grundstoffe weisen eine Korngröße zwischen 2 µm und 500 µm auf. Die pulverförmigen Grundstoffe können insbesondere ein Nickelpulver, ein Natriumchloridpulver, ein Eisenpulver, ein Aluminiumchloridpulver und/oder ein Natriumtetrachloroaluminatpulver sein. Die pulverförmigen Grundstoffe sind dazu vorgesehen, während zumindest eines Betriebs, insbesondere während einer Erstinbetriebnahme, der Speicherzellen 12, 38 eine aktive Masse der Kathoden 64, 70 und den Elektrolyten auszubilden. Die pulverförmigen Grundstoffe sind dazu vorgesehen sind, während zumindest eines Betriebs der Speicherzelle 12 im Kathodenraum 14 ein Reservoir für den flüssigen Elektrolyten auszubilden, welches dazu vorgesehen ist, einen Volumenausgleich zwischen einem geladenen und einem ungeladenen Zustand der Speicherzelle 12 zu gewährleisten. Insbesondere bildet zumindest ein erster Teil der pulverförmigen Grundstoffe, während zumindest eines Betriebs und insbesondere während einer Erstinbetriebnahme der Speicherzellen 12, 38, die aktive Masse der Kathoden 64, 70 aus, während zumindest ein zweiter Teil der pulverförmigen Grundstoffe den Elektrolyten ausbildet. Insbesondere bilden zumindest ein Nickelpulver, ein Natriumchloridpulver und ein Eisenpulver die aktive Masse der Kathoden 64, 70 aus. Ein Natriumtetrachloroaluminatpulver bildet insbesondere den Elektrolyten aus. Alternativ oder zusätzlich kann der Elektrolyt durch eine, während einer Erstinbetriebnahme der Speicherzellen 12, 38 stattfindende, chemische Reaktion von einem Natriumchloridpulver mit einem Aluminiumchloridpulver gebildet werden.

Bei einer Herstellung der Kathoden 64, 70 werden in einem ersten Verfahrensschritt die pulverförmigen Grundstoffe miteinander vermischt. Vorzugsweise erfolgt das Mischen der pulverförmigen Grundstoffe unter einer Inertgasatmosphäre. In einem weiteren Verfahrensschritt wird das so hergestellte Pulvergemisch beispielsweise mittels einer hydraulischen Presse zu einer Tablette verpresst. Das Verpressen erfolgt vorzugsweise unter einem Vakuum und/oder bei Raumtemperatur.

Zur Herstellung der Energiespeichervorrichtung 10 werden zunächst die Rahmen 20, 48 der Speicherzellen 12, 38 jeweils mittels Glas 22 mit den Separatoren 18, 46 verbunden. In einem weiteren Verfahrensschritt werden die in einem vorhergehenden Verfahrensschritt mit einer Oxidschicht vorkonditionierten kathodenseitigen Dichtringe 24, 50 und die anodenseitigen Dichtringe 32, 52 mittels der Glasdichtung 26 an den Rahmen 20, 48 befestigt. Insbesondere können die Verbindung zwischen den Separatoren 18, 46 und den Rahmen 20, 48 und die Befestigung der kathodenseitigen Dichtringe 24, 50 und/oder der anodenseitigen Dichtringe 32, 52 für jede Speicherzelle 12, 38 jeweils in einem gemeinsamen Verfahrensschritt erfolgen. Die Separatoren 18, 46, die Rahmen 20, 48 und die Dichtringe 24, 32, 50, 52 bilden jeweils eine mechanische Grundeinheit 56 der Speicherzellen 12, 38 aus. In einem weiteren Verfahrensschritt werden eine negative Endplatte 58, ein Stützelement 34 der Speicherzelle 12, eine mechanische Grundeinheit 56 der Speicherzelle 12, eine Kathode 64 der Speicherzelle 12, eine Bipolarplatte 40, ein Stützelement 60 der weiteren Speicherzelle 38, eine mechanische Grundeinheit 56 der weiteren Speicherzelle 38, eine Kathode 70 der weiteren Speicherzelle 38 und eine positive Endplatte 62 in einem Stapel angeordnet. In einem weiteren Verfahrensschritt wird der Stapel insbesondere in einer Vakuumkammer auf einen Druck von vorzugsweise weniger als 10 mbar evakuiert. In einem weiteren Verfahrensschritt wird der Stapel bis zu einem Druck zwischen 2 mbar und 50 mbar mit Helium geflutet. Der Stapel wird in einem weiteren Verfahrensschritt mit einer axialen Druckkraft beaufschlagt. Die Komponenten des Stapels werden in zumindest einem weiteren Verfahrensschritt insbesondere mittels eines Laserschweißverfahrens in einem Vakuum unter einem Druck von kleiner 30 mbar elektrisch leitend miteinander verschweißt. Die negative Endplatte 58 wird mit dem anodenseitigen Dichtring 32 der Speicherzelle 12 verschweißt. Der kathodenseitige Dichtring 24 der Speicherzelle 12 wird mit der Bipolarplatte 40 verschweißt. Der anodenseitige Dichtring 52 der weiteren Speicherzelle 38 wird mit der Bipolarplatte 40 verschweißt. Der kathodenseitige Dichtring 50 der weiteren Speicherzelle 38 wird mit der positiven Endplatte 62 verschweißt.

### Bezugszeichen

- 10: Energiespeichervorrichtung
- 12: Speicherzelle
- 14: Kathodenraum
- 16: Anodenraum
- 18: Separator
- 20: Rahmen
- 22: Glas
- 24: Dichtring
- 26: Glasdichtung
- 28: Metallschicht
- 30: Metallschicht
- 32: Dichtring
- 34: Stützelement
- 36: Ausnehmung
- 38: Speicherzelle
- 40: Bipolarplatte
- 42: Anodenraum
- 44: Kathodenraum
- 46: Separator
- 48: Rahmen
- 50: Dichtring
- 52: Dichtring
- 54: Stufenfalz
- 56: Grundeinheit
- 58: Endplatte
- 60: Stützelement
- 62: Endplatte
- 64: Kathode
- 66: Anode
- 68: Anode
- 70: Kathode

## Patentansprüche

1. Elektrochemische Energiespeichervorrichtung mit zumindest einer Speicherzelle (12), welche zumindest einen Kathodenraum (14), zumindest einen Anodenraum (16), zumindest einen zwischen dem Kathodenraum (14) und dem Anodenraum (16) angeordneten zumindest im Wesentlichen ebenen Separator (18) und zumindest einen elektrisch isolierenden Rahmen (20) aufweist, welcher zumindest den Kathodenraum (14) umgibt, wobei der Rahmen (20) mittels eines Glases (22) mit dem zumindest im Wesentlichen ebenen Separator (18) verbunden ist, **gekennzeichnet durch** zumindest einen kathodenseitigen Dichtring (24), welcher eine dem Kathodenraum (14) zugewandte Metallschicht (28), deren elektrochemisches Potential höher oder gleich einem elektrochemischen Potential eines aktiven Kathodenmaterials ist, und eine dem Kathodenraum (14) abgewandte Metallschicht (30) umfasst.

2. Energiespeichervorrichtung nach Anspruch 1, **dadurch gekennzeichnet, dass** die Speicherzelle (12) zumindest den kathodenseitigen Dichtring (24) aufweist, welcher mittels einer Glasdichtung (26) an einem Außenumfang des Rahmens (20) abdichtet und in jedem Betriebszustand eine positive mechanische Spannung auf die Glasdichtung (26) ausübt.

3. Energiespeichervorrichtung nach einem der vorhergehenden Ansprüche, **dadurch gekennzeichnet, dass** die Speicherzelle (12) zumindest einen anodenseitigen Dichtring (32) aufweist, welcher mittels einer Glasdichtung (26) an einem Außenumfang des Rahmens (20) abdichtet und in jedem Betriebszustand eine positive mechanische Spannung auf die Glasdichtung (26) ausübt.

4. Energiespeichervorrichtung nach einem der vorhergehenden Ansprüche, **dadurch gekennzeichnet, dass** die Speicherzelle (12) zumindest ein Stützelement (34) aufweist, welches dazu vorgesehen ist, den Separator (18) anodenseitig mechanisch zu stabilisieren und welches eine Vielzahl von Ausnehmungen (36) mit einem Durchmesser zwischen 1 mm und 3 mm aufweist, welche dazu vorgesehen sind, mit dem Separator (18) zumindest einen Hohlraum auszubilden und in zumindest einem Betriebszustand der Speicherzelle (12) zumindest ein Alkalimetall aufzunehmen.

5. Energiespeichervorrichtung nach einem der vorhergehenden Ansprüche, **dadurch gekennzeichnet, dass** die Speicherzelle (12) eine Kathode (64) aufweist, welche zumindest teilweise aus pulverförmigen Grundstoffen mit einer Korngröße zwischen 2 µm und 500 µm gepresst ist und in welcher sich bei einem ersten Aufheizen auf eine Betriebstemperatur zwischen 200°C und 350°C ein flüssiger Elektrolyt ausbildet.

6. Energiespeichervorrichtung nach Anspruch 5, **dadurch gekennzeichnet, dass** die pulverförmigen Grundstoffe dazu vorgesehen sind, während zumindest eines Betriebs der Speicherzelle (12) im Kathodenraum (64) ein Reservoir für den flüssigen Elektrolyten auszubilden, welches dazu vorgesehen ist, einen Volumenausgleich zwischen einem geladenen und einem ungeladenen Zustand der Speicherzelle (12) zu gewährleisten.

7. Verfahren zur Herstellung einer elektrochemischen Energiespeichervorrichtung (10) nach einem der vorhergehenden Ansprüche, die zumindest die Speicherzelle (12) umfasst, welche zumindest den Kathodenraum (14), zumindest den Anodenraum (16), zumindest den zwischen dem Kathodenraum (14) und dem Anodenraum (16) angeordneten Separator (18) und zumindest den elektrisch isolierenden Rahmen (20) aufweist, welcher zumindest den Kathodenraum (14) umgibt, wobei in einem Verfahrensschritt der Rahmen (20) mittels des Glases (22) gleichzeitig mit dem Separator (18), dem kathodenseitigen Dichtring (24), welcher mit einer Oxidschicht vorkonditioniert ist, und/oder einem anodenseitigen Dichtring (32) verbunden wird, **dadurch gekennzeichnet, dass** eine Kathode (64) der Speicherzelle (12) in zumindest einem Verfahrensschritt zumindest teilweise aus pulverförmigen Grundstoffen gepresst wird.

8. Verfahren nach Anspruch 7, **dadurch gekennzeichnet, dass** zwei zumindest im Wesentlichen identisch ausgebildete Speicherzellen (12, 38), in einem Vakuum unter einem Druck von kleiner 30 mbar elektrisch leitend miteinander verschweißt werden.

## Claims

1. Electrochemical energy storage device with at least one storage cell (12) comprising at least one cathode space (14), at least one anode space (16), at least one at least substantially planar separator (18), which is arranged between the cathode space (14) and the anode space (16), and at least one electrically insulating frame (20) surrounding at least the cathode space (14), wherein the frame (20) is connected to the at least substantially planar separator (18) by means of a glass (22), **characterised by** at least one cathode-side sealing ring (24) comprising a metal layer (28) which faces towards the cathode space (14) and whose electrochemical potential is higher than or equal to an electrochemical potential of an active cathode material, and comprising a metal layer (30) which faces away from the cathode space (14).

2. Energy storage device according to claim 1, **characterised in that** the storage cell (12) comprises at least the cathode-side sealing ring (24) which seals, by means of a glass seal (26), on an outer circumference of the frame (20) and exerts in each operation state a positive mechanical tension onto the glass seal (26).

3. Energy storage device according to one of the preceding claims, **characterised in that** the storage cell (12) comprises at least one anode-side sealing ring (32) which seals, by means of a glass seal (26), on an outer circumference of the frame (20) and exerts in each operation state a positive mechanical tension onto the glass seal (26).

4. Energy storage device according to one of the preceding claims, **characterised in that** the storage cell (12) comprises at least one support element (34), which is configured for an anode-side mechanical stabilisation of the separator (18) and which has a plurality of recesses (36) with a diameter between 1 mm and 3 mm that are configured to form at least one hollow space together with the separator (18) and to receive at least one alkaline metal in at least one operation state of the storage cell (12).

5. Energy storage device according to one of the preceding claims, **characterised in that** the storage cell (12) comprises a cathode (64), which is at least partly pressed from powdery basis materials having a grain size between 2 µm and 500 µm and in which, in a first heating to an operative temperature between 200°C and 350°C, a liquid electrolyte originates.

6. Energy storage device according to claim 5, **characterised in that** the powdery basis materials are configured to form in the cathode space (64), during at least one operation of the storage cell (12), a reservoir for the liquid electrolyte, the reservoir being provided to ensure a volume compensation between a charged and an uncharged state of the storage cell (12).

7. Method for a production of an electrochemical energy storage device (10) according to one of the preceding claims that includes at least the storage cell (12) which comprises at least the cathode space (14), at least the anode space (16), at least the separator (18) that is arranged between the cathode space (14) and the anode space (16) and at least the electrically insulating frame (20) that surrounds at least the cathode space (14), wherein in one method step the frame (20) is simultaneously connected, by means of the glass (22), to the separator (18), to the cathode-side sealing ring (24), which is pre-conditioned with an oxide layer, and/or to an anode-side sealing ring (32), **characterised in that** in at least one method step a cathode (64) of the storage cell (12) is at least partly pressed from powdery basis materials.

8. Method according to claim 7, **characterised in that** two at least substantially identically implemented storage cells (12, 38) are welded in an electrically conductive manner with one another, in a vacuum, at a pressure of less than 30 mbar.

## Revendications

1. Dispositif électrochimique d'accumulation d'énergie avec au moins une cellule accumulateur (12) comprenant au moins un espace de cathode (14), au moins un espace d'anode (16), au moins un séparateur (18), qui est au moins sensiblement planaire et est agencé entre l'espace de cathode (14) et l'espace d'anode (16), et au moins un cadre (20) électriquement isolant et entourant au moins l'espace de cathode (14), le cadre (20) étant raccordé avec le séparateur (18) au moins sensiblement planaire par le biais d'un verre (22),
**caractérisé par** au moins une bague d'étanchéité côté-cathode (24), comportant une couche de métal (28) faisant face à l'espace de cathode (14), le potentiel électrochimique de laquelle est supérieur ou égal à un potentiel électrochimique d'un matériau de cathode active, et comportant une couche de métal (30) détournée de l'espace de cathode (14).

2. Dispositif d'accumulation d'énergie selon la revendication 1,
**caractérisé en ce que** la cellule accumulateur (12) comporte au moins la bague d'étanchéité côté-cathode (24), qui cachète, par un cachetage vitreux (26), sur une circonférence extérieure du cadre (20) et applique une tension mécanique positive sur le cachetage vitreux (26) en chaque état de fonctionnement.

3. Dispositif d'accumulation d'énergie selon l'une quelconque des revendications précédentes,
**caractérisé en ce que** la cellule accumulateur (12) comporte au moins une bague d'étanchéité côté-anode (32), qui cachète, par un cachetage vitreux (26), sur une circonférence extérieure du cadre (20) et applique une tension mécanique positive sur le cachetage vitreux (26) en chaque état de fonctionnement.

4. Dispositif d'accumulation d'énergie selon l'une quelconque des revendications précédentes,
**caractérisé en ce que** la cellule accumulateur (12) comporte au moins un élément de support (34), qui est configuré pour mécaniquement stabiliser le séparateur (18) sur le côté-anode et qui comporte une pluralité des échancrures (36) ayant un diamètre entre 1 mm et 3 mm, qui sont configurées à former, avec le séparateur (18), au moins un espace creux et à recevoir au moins un métal alcalin en au moins un état de fonctionnement de la cellule accumulateur (12).

5. Dispositif d'accumulation d'énergie selon l'une quelconque des revendications précédentes,
**caractérisé en ce que** la cellule accumulateur (12) comporte une cathode (64), qui est au moins partiellement pressée des matériaux basiques poudreux ayant une taille du grain entre 2 µm et 500 µm, et dans laquelle se forme un électrolyte liquide en premier chauffage à une température de fonctionnement entre 200°C et 350°C.

6. Dispositif d'accumulation d'énergie selon la revendication 5,
**caractérisé en ce que** les matériaux basiques poudreux sont prévus à former, pendant au moins un état de fonctionnement de la cellule accumulateur (12), un réservoir pour l'électrolyte liquide dans l'espace de cathode (64), ledit réservoir étant configuré pour assurer une compensation volumique entre un état chargé et un état non-chargé de la cellule accumulateur (12).

7. Procédé pour la production d'un dispositif électrochimique d'accumulation d'énergie (10) selon l'une quelconque des revendications précédentes, ledit procédé comportant au moins la cellule accumulateur (12) ayant au moins l'espace de cathode (14), au moins l'espace d'anode (16), au moins le séparateur (18) agencé entre l'espace de cathode (14) et l'espace d'anode (16) et au moins le cadre (20) électriquement isolant et entourant au moins l'espace de cathode (14), le cadre (20) étant raccordé, en une étape du procédé, par le biais du verre (22), simultanément avec le séparateur (18), avec la bague d'étanchéité côté-cathode (24), qui est pré-conditionné par une couche d'oxide, et/ou avec une bague d'étanchéité côté-anode (32), **caractérisé en ce qu'**en au moins une étape du procédé, une cathode (64) de la cellule accumulateur (12) est au moins partiellement pressée des matériaux basiques poudreux.

8. Procédé selon la revendication 7, **caractérisé en ce que** deux cellules accumulateurs (12, 38) implémentées au moins sensiblement identiquement, sont soudées l'une avec l'autre de manière électriquement conductrice, sous vide, avec une pression inférieure à 30 mbar.
